# EUROPEAN PATENT APPLICATION

(11) **EP 4 654 346 A1**
(43) Date of publication of application: **26.11.2025**
(21) Application number: 24802585.0
(22) Date of filing: 08.03.2024
(51) Int. Cl.: H01M 50/184

(54) **BATTERY CELL, BATTERY, AND ELECTRICAL APPARATUS**

(30) Priority: 11.05.2023 CN 202310529161
(71) Applicant: Contemporary Amperex Technology Co., Limited, Ningde, Fujian 352100 (CN)
(72) Inventor: WU, Kai, Ningde, Fujian 352100 (CN); CAO, Mengkai, Ningde, Fujian 352100 (CN); CHEN, Long, Ningde, Fujian 352100 (CN); WU, Yu, Ningde, Fujian 352100 (CN); HUANG, Shoujun, Ningde, Fujian 352100 (CN); LIN, Denghua, Ningde, Fujian 352100 (CN); LUO, Yan, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Lorenz Seidler Gossel Part. mbB
(86) International application number: PCT/CN2024/080760
(87) International publication number: WO 2024/230297

(57) **Abstract**

Embodiments of the present application provide a battery cell, a battery and an electrical apparatus, which can improve the sealing degree between a sealing member and a first wall and reduce the possibility of the sealing member falling off, thereby improving the reliability of the battery cell. The battery cell includes: an electrode terminal; a first wall, the first wall being provided with an electrode lead-out hole, and the electrode terminal and the electrode lead-out hole being arranged opposite to each other; and a sealing member, the sealing member being arranged around the electrode lead-out hole, the sealing member including an extension portion, the extension portion being at least partially arranged between the first wall and the electrode terminal, the extension portion being provided with one of a first protrusion and a first groove, the first wall being provided with the other one of the first protrusion and the first groove, and the first protrusion and the first groove being matched with each other.

## Description

The present application claims priority to Chinese Patent Application No. 202310529161.9 filed with the China National Intellectual Property Administration on May 11, 2023 and entitled "BATTERY CELL, BATTERY AND ELECTRICAL APPARATUS", the entire contents of which are incorporated herein by reference.

### TECHNICAL FIELD

The present application relates to the field of batteries, in particular to a battery cell, a battery and an electrical apparatus.

### BACKGROUND

Energy conservation and emission reduction are the key to the sustainable development of the automobile industry. In this case, due to the advantages of energy conservation and environment protection, electric vehicles have become an important part of the sustainable development of the automobile industry. The battery technology is an important factor related to the development of electric vehicles.

With the development of the battery technology, various battery performances are constantly improving. During the use process of a battery, the reliability of the electrical performance of the battery is an important factor for measuring the quality of the battery. Therefore, how to improve the reliability of batteries is still a problem to be solved.

### SUMMARY OF THE INVENTION

Embodiments of the present application provide a battery cell, a battery and an electrical apparatus, which can improve the reliability of batteries.

According to a first aspect, a battery cell is provided, including: an electrode terminal; a first wall, the first wall being provided with an electrode lead-out hole, and the electrode terminal and the electrode lead-out hole being arranged opposite to each other; and a sealing member, the sealing member being arranged around the electrode lead-out hole, the sealing member including an extension portion, the extension portion being at least partially arranged between the first wall and the electrode terminal, the extension portion being provided with one of a first protrusion and a first groove, the first wall being provided with the other one of the first protrusion and the first groove, and the first protrusion and the first groove being matched with each other.

By arranging the mutually matched protrusion and groove on the sealing member and the first wall, the sealing member and the first wall may be matched more closely to improve the sealing degree between the sealing member and the first wall and reduce the possibility of the sealing member falling off, thereby improving the reliability of the battery cell.

In some embodiments, the surface of the first wall facing the extension portion has the first groove, and the surface of the extension portion facing the first wall has the first protrusion.

By arranging the first groove on the first wall and arranging the first protrusion matched with the first groove on the sealing member, in a case that the first wall is subjected to a pressure perpendicular to the first wall, a side wall of the first groove can limit the relative sliding between the first protrusion and the first groove, which is conducive to reducing the possibility of the sealing member falling off from the first wall, thereby improving the sealing degree of the sealing member to the first wall and improving the reliability of the battery cell.

In some embodiments, the first protrusion is located at the outer edge of the extension portion.

In a case that the first wall is subjected to an external force, the deformation of the region where the outer edge of the sealing member is located is smaller, and the first protrusion is not easy to slip out of the first groove, thereby reducing the possibility of the sealing member detaching from the first wall, improving the sealing degree of the sealing member to the first wall, and improving the reliability of the battery cell.

In some embodiments, the extension portion has a plurality of first protrusions, and the plurality of first protrusions are arranged at intervals along the radial direction of the electrode lead-out hole.

The plurality of first protrusions can limit the relative sliding between the first protrusions and the first grooves at a plurality of positions, thereby further reducing the possibility of the sealing member falling off from the first wall.

In some embodiments, the distance between the surface where the opening of the first groove is located and the surface where the bottom wall of the first groove is located is A2, the distance between the surface where the opening of the first groove is located and the surface of the first wall away from the extension portion is A, and A2 and A satisfy: A2/A≤95%, and/or A-A2≥0.2 mm.

Satisfying the above range can make the first wall have higher strength and reduce the possibility of the first wall being broken by an external force.

In some embodiments, the size of the first protrusion in the radial direction of the electrode lead-out hole is T1, the size of the first groove in the radial direction of the electrode lead-out hole is A1, and A1 and T1 satisfy: T1/A1≤98%, and/or A1-T1≥0.1mm.

Satisfying the above range is conducive to improving the production efficiency and qualified rate of the battery cell.

In some embodiments, the size of the first protrusion in the thickness direction of the first wall is T2, the maximum size of the first groove in the thickness direction of the first wall is A2, and T2 and A2 satisfy 0<T2/A2≤100%.

Satisfying the above range can achieve better sealing between the first wall and the electrode terminal, which is conducive to improving the reliability of the battery cell.

In some embodiments, the size of the first protrusion in an uncompressed state in the thickness direction of the first wall is T3, the maximum size of the first groove in the thickness direction of the first wall is A2, and T3 and A2 satisfy 30%<T3/A2≤150%.

Satisfying the above range allows the sealing member to provide good sealing performance for the battery cell while limiting the sliding of the sealing member in a case that the first wall is deformed by a force, thereby reducing the possibility of the sealing member falling off from the first wall, which is conducive to improving the reliability of the battery.

In some embodiments, T3 and A2 satisfy 85%<T2/A2≤100%.

This can improve the limiting effect on the first protrusion on the relative sliding of the sealing member, and can also achieve a better sealing effect.

In some embodiments, the surface of the first wall facing the extension portion is provided with a second protrusion, the second protrusion is arranged around the electrode lead-out hole, the extension portion is provided with a second groove, and the second protrusion is matched with the second groove.

By arranging the second protrusion and second groove matched with each other, the sealing member may be better positioned during the assembly process with the first wall, thereby reducing the possibility of assembly failure caused by misalignment between the sealing member and the first wall.

In some embodiments, the surface of the first wall away from the extension portion is provided with a third protrusion corresponding to the first groove.

The third protrusion may increase the thickness of the first wall in the region where the first groove is located, improve the strength of the first wall, and reduce the possibility of the first wall being broken in a thinner region due to an external force, thereby improving the reliability of the battery cell.

In some embodiments, the size of the third protrusion in the radial direction of the electrode lead-out hole is C1, the size of the first groove in the radial direction of the electrode lead-out hole is A1, the length of the first wall is L, and A1, C1 and L satisfy: A1≤C1≤50 mm, and/or C1/L≤50%.

Satisfying the above range can improve the strength of the first wall and reduce the production cost.

In some embodiments, the joint between the third protrusion and the first wall is provided with a rounded corner and/or a chamfered corner.

The rounded corner and/or the chamfered corner may reduce the possibility of stress concentration in a transition region between the third protrusion and the first wall, which is conducive to improving the strength of the first wall, so that the first wall is not easily broken when subjected to an external force.

In some embodiments, the joint between the third protrusion and the first wall is provided with a first rounded corner and/or a second rounded corner, and in the radial direction of the electrode lead-out hole, the first rounded corner is close to the electrode lead-out hole, and the second rounded corner is far away from the electrode lead-out hole.

The first rounded corner and/or the second rounded corner may reduce the stress concentration at corresponding positions, so that the first wall is not easily broken in the transition region between the third protrusion and the first wall when subjected to an external force, which is conducive to improving the reliability of the first wall.

In some embodiments, the radius of the first rounded corner and/or the second rounded corner is half of the size of the third protrusion in the thickness direction of the first wall.

This may reduce the stress concentration at the corresponding corner positions, which is conducive to improving the strength of the first wall.

In some embodiments, the joint between the third protrusion and the first wall is provided with a first chamfered corner and/or a second chamfered corner, and in the radial direction of the electrode lead-out hole, the first chamfered corner is close to the electrode lead-out hole, and the second chamfered corner is far away from the electrode lead-out hole.

The first chamfered corner and/or the second chamfered corner may reduce the stress concentration at corresponding positions of transition between the third protrusion and the first wall, so that the first wall is not easily broken in the transition region between the third protrusion and the first wall when subjected to an external force, which is conducive to improving the reliability of the first wall.

In some embodiments, the chamfered corner size of the first chamfered corner and/or the second chamfered corner along the thickness direction of the first wall is C4, the size of the third protrusion in the thickness direction of the first wall is C2, and C2 and C4 satisfy 0.1 mm≤C4≤C2.

This may reduce the stress concentration at the position of the first chamfered corner and/or the second chamfered corner.

In some embodiments, the third protrusion is provided with a third rounded corner and/or a third chamfered corner at an end away from the extension portion.

This may reduce the stress concentration at the corner of the third protrusion and reduce the possibility of deformation and cracking of the third protrusion, thereby being conducive to improving the strength of the first wall.

In some embodiments, the size of the third protrusion in the radial direction of the electrode lead-out hole is C1, and the size in the thickness direction of the first wall is C2; the chamfered corner size of the third chamfered corner in the radial direction of the electrode lead-out hole is C7, and the chamfered corner size along the thickness direction of the first wall is C8; and C1, C2, C7 and C8 satisfy: 0.1 mm≤C7≤C2, and/or 0.1 mm≤C8≤0.45C1.

This may reduce the stress concentration at the position of the third chamfered corner, and can also improve the strength of the first wall.

In some embodiments, the joint between the bottom wall and the side wall of the first groove is provided with a rounded corner.

The rounded corner transition between the bottom wall and the side wall of the first groove may reduce the stress concentration that may be generated at the corner of the first groove, and may also reduce the stress concentration generated after the sealing member is compressed in the first groove, so as to improve the strength of the first wall at the first groove, thereby being conducive to improving the reliability of the battery cell.

In some embodiments, the surface of the first wall facing the extension portion has the first protrusion, the surface of the extension portion facing the first wall has the first groove, and the first groove is located at the outer edge of the sealing member.

The structure of arranging the first groove on the sealing member and arranging the first protrusion on the first wall can limit the relative sliding of the sealing member and the first wall without reducing the thickness of the first wall. This can not only improve the strength of the first wall, but also help reduce the possibility of the sealing member falling off from the first wall, thereby improving the sealing degree of the sealing member to the first wall and improving the reliability of the battery cell.

In some embodiments, a fixing member is arranged around the electrode terminal, and the fixing member is configured to fix the electrode terminal and the first wall.

By arranging the fixing member around the electrode terminal, on the one hand, the electrode terminal may be fixed to the first wall, and on the other hand, it is conducive to the insulation between the electrode terminal and the first wall, thereby reducing the possibility of short circuit of the battery cell.

In some embodiments, the fixing member includes an insulating portion, the insulating portion surrounds the electrode terminal, and a part of the sealing member provided with the first protrusion or the first groove is located between the insulating portion and the first wall.

This may further achieve sealing between the insulating member and the first wall, which is conducive to improving the sealing performance of the battery cell. At the same time, in this structure, the size of the extension portion in the radial direction of the electrode lead-out hole is relatively long. In a case that the first wall is deformed by an external force, the sealing member needs to move for a longer distance before falling off, which is also conducive to reducing the possibility of the sealing member falling off.

In some embodiments, the sealing member includes a main body portion connected to the extension portion, and at least a part of the main body portion is accommodated in the electrode lead-out hole.

The main body portion in the sealing member may further provide sealing for the electrode lead-out hole, which is conducive to improving the sealing performance of the sealing member to the battery cell.

In some embodiments, the battery cell includes: a case, the case being of a hollow structure with an opening; and a cover plate, the cover plate being configured to cover the opening, where the cover plate or the case includes the first wall.

The case and the cover plate of the battery cell provide a sealed space for the battery cell, so that chemical energy can be converted to electric energy inside the battery cell, and the electric energy is provided for the electrical apparatus. The case or the cover plate as the first wall to arrange the sealing structure is also conducive to improving the sealing performance of the battery cell.

In some embodiments, the battery cell includes: an electrode assembly, the electrode assembly being accommodated in the hollow structure, and the electrode assembly being electrically connected to the electrode terminal.

The electrode assembly may achieve the conversion of chemical energy inside the battery cell to electric energy, and output the electric energy through the electrode terminal, thereby providing the electric energy for the electrical apparatus.

In some embodiments, the sealing member is bonded to the first wall or the electrode terminal.

Bonding can increase the friction force between the sealing member and the first wall or the electrode terminal, so that when the sealing member tends to slide, the sliding of the sealing member can be limited by the friction force to reduce the possibility of the sealing member falling off, thereby improving the sealing degree of the sealing member to the first wall and improving the reliability of the battery cell.

According to a second aspect, a battery is provided, including the battery cell according to any one of the embodiments in the first aspect.

According to a third aspect, an electrical apparatus is provided, including the battery according to any one of the embodiments in the second aspect. The battery is configured to provide electric energy for the electrical apparatus.

According to the battery cell provided in the embodiments of the present application, by arranging the mutually matched protrusion and groove on the sealing member and the first wall, the sealing member and the first wall may be matched more closely to improve the sealing degree between the sealing member and the first wall and reduce the possibility of the sealing member falling off, thereby improving the reliability of the battery cell.

### DESCRIPTION OF DRAWINGS

In order to more clearly illustrate the technical solutions of the embodiments of the present application, the drawings to be used in the embodiments of the present application will be described briefly below. Obviously, the drawings described below depict merely some embodiments of the present application. For those skilled in the art, other drawings can also be obtained based on these drawings without any creative effort.
FIG. 1 is a schematic structural diagram of a vehicle provided in an embodiment of the present application.
FIG. 2 is a schematic exploded structural diagram of a battery provided in an embodiment of the present application.
FIG. 3 is a schematic exploded structural diagram of a battery cell provided in an embodiment of the present application.
FIG. 4 is a schematic diagram of a cross-sectional structure taken along a K-K direction in FIG. 3.
FIG. 5 is a schematic enlarged structural diagram of a part M in FIG. 4.
FIG. 6 is another schematic enlarged structural diagram of the part M in FIG. 4.
FIG. 7 is still another schematic enlarged structural diagram of the part M in FIG. 4.
FIG. 8 is yet another schematic enlarged structural diagram of the part M in FIG. 4.
FIG. 9 is still yet another schematic enlarged structural diagram of the part M in FIG. 4.
FIG. 10 is a further schematic enlarged structural diagram of the part M in FIG. 4.
FIG. 11 shows a schematic enlarged diagram of the part M in FIG. 4 in a case that a sealing member is not assembled and a schematic enlarged diagram of the sealing member in a case that the sealing member is not assembled.
FIG. 12 is a still further schematic enlarged structural diagram of the part M in FIG. 4.
FIG. 13 is a yet further schematic enlarged structural diagram of the part M in FIG. 4.
FIG. 14 is a schematic enlarged structural diagram of a part N in FIG. 13.
FIG. 15 is another schematic enlarged structural diagram of the part N in FIG. 13.
FIG. 16 is still another schematic enlarged structural diagram of the part N in FIG. 13.
FIG. 17 is yet another schematic enlarged structural diagram of the part N in FIG. 13.
FIG. 18 is still yet another schematic enlarged structural diagram of the part N in FIG. 13.
FIG. 19 is a still yet further schematic enlarged structural diagram of the part M in FIG. 4.
FIG. 20 is a schematic exploded structural diagram of another battery cell provided in an embodiment of the present application.

In the drawings, the figures are not drawn to the actual scale.

### DETAILED DESCRIPTION

The embodiments of the present application are further described in detail below with reference to the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "a plurality of" means two or more. The orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors. All technical and scientific terms used in the present application have the same meanings as those commonly understood by those skilled in the art to which the present application belongs. The terms used in the application specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skills in the art, the specific meanings of the above terms in the present application may be understood according to specific circumstances.

The reference to "embodiment" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the present application, the term "and/or" is only an association relationship for describing associated objects, indicating that there may be three relationships, for example, the expression A and/or B may represent three situations: A exists alone, both A and B exist, and B exists alone. In addition, the character "/" in the present application generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

In the embodiments of the present application, the same reference numerals indicate the same components and, for the sake of brevity, the detailed description of the same components is omitted in the different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the battery cell may include a lithium-ion secondary battery, a lithium-ion primary battery, a lithium sulfur battery, a sodium/lithium-ion battery, a sodium-ion battery, a lithium metal battery or a magnesium-ion battery and so on. This is not limited in the embodiments of the present application. The battery cell may be in a cylindrical shape, a flat shape, a cuboid shape or another shape, which is not limited in the embodiments of the present application either. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box body for packaging one or more battery cells. The box body can prevent liquid or other foreign matters from affecting charging or discharging of the battery cells.

The battery cell includes an electrode assembly and an electrolyte solution. The electrode assembly is composed of a positive electrode plate, a negative electrode plate and a separator. The battery cell operates mainly relying on the movement of metal ions between the positive electrode plate and the negative electrode plate. The positive electrode plate includes a positive electrode current collector and a positive electrode active material layer. The positive electrode active material layer is coated on the surface of the positive electrode current collector. The part of the positive electrode current collector not coated with the positive electrode active material layer protrudes from the part of the positive electrode current collector coated with the positive electrode active material layer, and the part of the positive electrode current collector not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer. The negative electrode active material layer is coated on the surface of the negative electrode current collector. The parts of the negative electrode current collector not coated with the negative electrode active material layer protrudes from the parts of the negative electrode current collector coated with the negative electrode active material layer, and the parts of the negative electrode current collector not coated with the negative electrode active material layer serve as a negative tab. The material of the negative electrode current collector may be copper, and the negative electrode active material may be carbon, silicon, lithium metal or lithium alloy, etc. In order to ensure that no fusing occurs when a large current passes, there are a plurality of positive tabs which are stacked together, and there are a plurality of negative tabs which are stacked together. The material of the separator may be polypropylene (PP), polyethylene (PE), or the like. In addition, the electrode assembly in the embodiments of the present application includes, but is not limited to, a wound structure or a stacked structure.

In order to provide electric energy for the electrical apparatus in a relatively reliable case, the battery cell often needs to be provided with a sealing structure to isolate the inside of the battery cell from the external environment, so as to reduce the possibility of impurities in the external environment entering the battery cell, and also reduce the risk of electrolyte leakage inside the battery cell. However, during use, the battery cell will inevitably be subjected to impact, vibration or pressure from the external environment. In particular, in a case that the wall of the battery cell is subjected to pressure perpendicular to the wall, the sealing structure arranged on the wall is prone to deformation or even falling off, thereby greatly reducing the reliability of the battery cell.

In view of this, an embodiment of the present application provides a battery cell, in which mutually matched protrusions and grooves are arranged on a first wall provided with an electrode lead-out hole and a sealing member surrounding the electrode lead-out hole, so as to improve the sealing performance of the battery cell. Even in a case that the first wall is subjected to a pressure perpendicular to the first wall, the matched protrusions and grooves can improve the matching degree between the sealing member and the first wall, and reduce the possibility of the sealing member falling off, thereby improving the reliability of the battery cell.

The technical solutions described in the embodiments of the present application are all applicable to various electrical devices using batteries. The electrical devices may be vehicles, mobile phones, portable devices, laptops, ships, spacecrafts, electric toys, electric tools, and the like. The vehicles may be fuel vehicles, gas vehicles or new energy vehicles, and the new energy vehicles may be all-electric vehicles, hybrid electric vehicles, extended range electric vehicles, and the like. The spacecrafts include airplanes, rockets, space shuttles, spaceships, and the like. The electric toys include fixed or mobile electric toys, such as game consoles, electric vehicle toys, electric ship toys and electric airplane toys. The electric tools include metal cutting electric tools, grinding electric tools, assembly electric tools and railway electric tools, such as electric drills, electric grinders, electric wrenches, electric screw drivers, electric hammers, electric impact drills, concrete vibrators and electric planers. The embodiments of the present application include, but are not limited to, the above electrical devices.

For the convenience of illustration, the following embodiments are illustrated with the electrical device being a vehicle as an example.

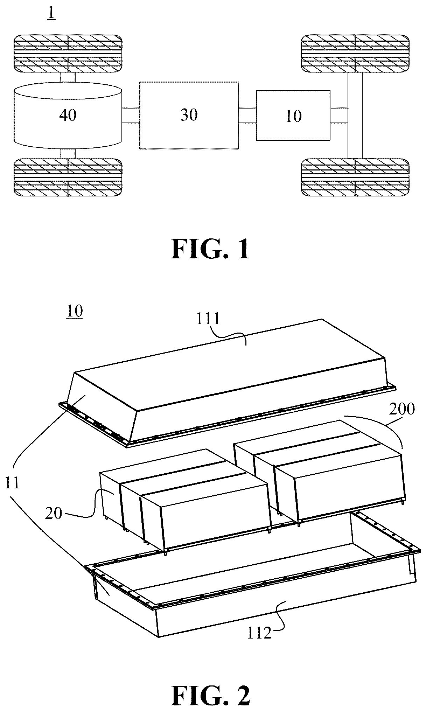

FIG. 1 is a schematic structural diagram of a vehicle 1 according to an embodiment of the present application. The vehicle 1 may be a fuel vehicle, a gas vehicle or a new energy vehicle, and the new energy vehicle may be an all-electric vehicle, a hybrid electric vehicle, an extended range electric vehicle, or the like. A motor 40, a controller 30 and a battery 10 may be arranged inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 may be used not only as an operating power source of the vehicle 1, but also as a driving power source of the vehicle 1, replacing or partially replacing fuel or natural gas to provide driving power for the vehicle 1.

In order to meet different power requirements, the battery may include a plurality of battery cells, where the plurality of battery cells may be in series connection, parallel connection or series-parallel connection. The series-parallel connection refers to a combination of series connection and parallel connection. The battery may also be referred to as a battery pack. Optionally, first, a plurality of battery cells may be in series connection, parallel connection or series-parallel connection to form a battery module, and then, a plurality of battery modules may be in series connection, parallel connection or series-parallel connection to form a battery. That is, a plurality of battery cells may directly form a battery, or may first form a battery module, and then, the battery modules form a battery.

For example, FIG. 2 shows a schematic structural diagram of a battery 10 according to an embodiment of the present application. The battery 10 may include at least one battery module 200. The battery module 200 includes a plurality of battery cells 20. The battery 10 may further include a box body 11, the inside of the box body 11 is of a hollow structure, and the plurality of battery cells 20 are accommodated in the box body 11. FIG. 2 shows a possible implementation of the box body 11 according to an embodiment of the present application. As shown in FIG. 2, the box body 11 may include two portions, which are referred to as a first portion 111 and a second portion 112 respectively, and the first portion 111 and the second portion 112 are fastened together. The shapes of the first portion 111 and the second portion 112 may be determined according to a combined shape of the battery modules 200, and at least one of the first portion 111 and the second portion 112 has an opening. For example, as shown in FIG. 2, each of the first portion 111 and the second portion 112 may be a hollow cuboid with only one face as an opening face, the opening of the first portion 111 and the opening of the second portion 112 are arranged opposite to each other, and the first portion 111 and the second portion 112 are fastened to each other to form the box body 11 having a closed chamber.

For another example, unlike that shown in FIG. 2, only one of the first portion 111 and the second portion 112 may be a hollow cuboid having an opening, and the other may be of a plate shape to cover the opening. For example, here taking the second portion 112 being a hollow cuboid with only one face as an opening face and the first portion 111 being of a plate shape as an example, the first portion 111 covers the opening of the second portion 112 to form the box body 11 with the closed chamber which can be configure to accommodate a plurality of battery cells 20. The plurality of battery cells 20 are assembled in parallel, in series or in series and parallel, and then placed in the box body 11 formed by fastening the first portion 111 with the second portion 112 together.

Optionally, the battery 10 may further include other structures, which will not be repeated here. For example, the battery 10 may further include a bus component, and the bus component is configured to achieve electrical connection between the plurality of battery cells 20, such as parallel connection, series connection or series-parallel connection. Specifically, the bus component may achieve electrical connection between the battery cells 20 by connecting electrode terminals of the battery cells 20. Further, the bus component may be fixed to the electrode terminal of the battery cell 20 by welding. Electric energy of the plurality of battery cells 20 may be further led out through the box 11 by an electrically conductive structure.

According to different power requirements, the number of battery cells 20 in a battery module 200 may be set to any numerical value. The plurality of battery cells 20 may be in series connection, parallel connection or series-parallel connection to achieve a larger capacity or power. Since each battery 10 may include more battery cells 20, for ease of mounting, the battery cells 20 are arranged in groups, and each group of battery cells 20 forms a battery module 200. The number of battery cells 20 included in the battery module 200 is not limited, and may be set as required. The battery 10 may include a plurality of battery modules 200 which may be connected in series, in parallel or in series and parallel.

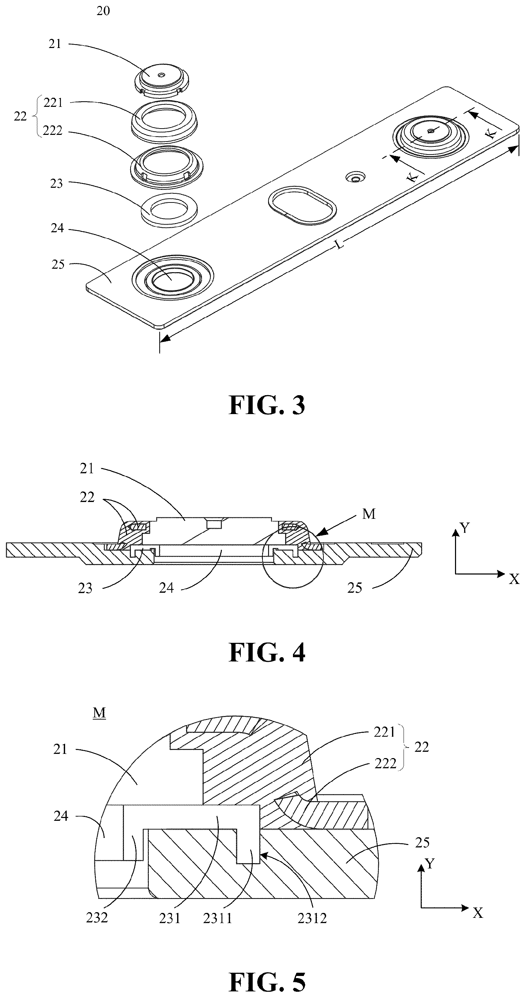

FIG. 3 to FIG. 6 show schematic diagrams of a battery cell 20 provided in an embodiment of the present application. In FIG. 3 to FIG. 6, the battery cell 20 may include an electrode terminal 21, a first wall 25 and a sealing member 23.

The first wall 25 is provided with an electrode lead-out hole 24, and the electrode terminal 21 is arranged opposite to the electrode lead-out hole 24. The sealing member 23 is arranged around the electrode lead-out hole 24. The sealing member 23 includes an extension portion 231. The extension portion 231 is at least partially arranged between the first wall 25 and the electrode terminal 21. The extension portion 231 has one of a first protrusion 2311 and a first groove 2312, the first wall 25 has the other of the first protrusion 2311 and the first groove 2312, and the first protrusion 2311 and the first groove 2312 are matched with each other.

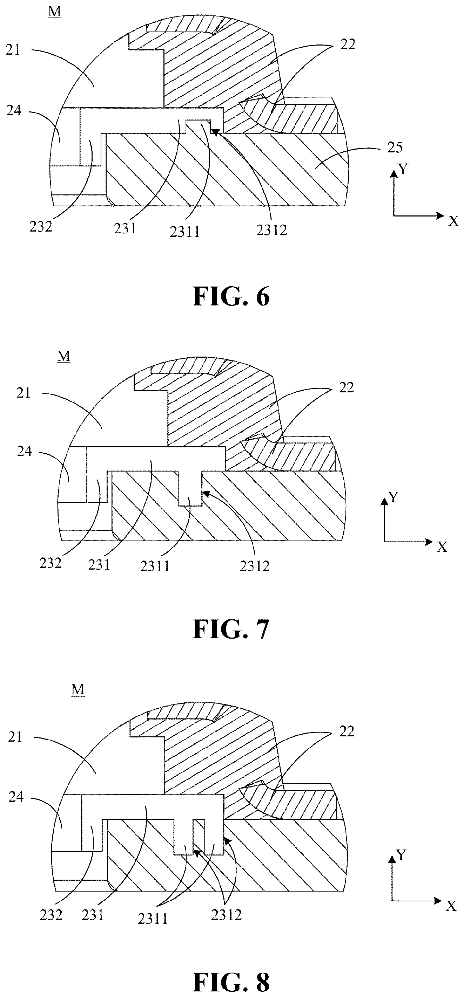

The battery cell 20 shown in FIG. 3 is described by taking an example in which two electrode terminals 21 are arranged on the first wall 25, where one electrode terminal 21 is shown in an exploded structure, and the other electrode terminal 21 is shown in an assembly structure. A cross-sectional diagram of the assembly structure of the electrode terminal in FIG. 3 along the K-K direction is shown in FIG. 4. FIG. 5 is a schematic enlarged diagram of a possible structure of the part M in FIG. 4. FIG. 6 is a schematic enlarged diagram of another possible structure of the part M in FIG. 4.

The electrode terminal 21 is a structure in the battery cell 20 for leading the electric energy inside the battery cell 20 to the outside of the battery cell 20, and may be connected to an electrical apparatus, so that the battery cell 20 may provide electric energy for the electrical apparatus. The battery cell 20 may include two electrode terminals 21, and the two electrode terminals 21 may be arranged on the first wall 25 and fixed to the plane where the first wall 25 is located. The two electrode terminals 21 are a positive electrode terminal and a negative electrode terminal respectively. Each electrode terminal 21 is correspondingly provided with a connection member, also referred to as a current collecting member, which is located between the first wall 25 and the electrode assembly 31 and configured to electrically connect the electrode assembly 31 to the electrode terminal 21. In some embodiments, the battery cell 20 may be provided with two or more electrode terminals 21. In some embodiments, the electrode terminals 21 of the battery cells 20 may be located on the same wall of the battery cells 20, or on opposite walls, or on adjacent walls.

The first wall 25 may be any wall of the battery cell 20, and the first wall 25 is provided with an electrode lead-out hole 24. The electrode lead-out hole 24 may provide a space for electrical connection between the electrode terminal 21 and the electrode assembly 31. For example, the connection member may pass through the electrode lead-out hole 24 and be connected to the electrode terminal 21. The electrode terminal 21 is arranged opposite to the electrode lead-out hole 24. For example, the electrode terminal 21 may be arranged on a side of the electrode lead-out hole 24 close to the outside of the battery cell 20. In some embodiments, at least a part of the electrode terminal 21 may be accommodated in the electrode lead-out hole 24. In some embodiments, the electrode terminal 21 may pass through the electrode lead-out hole 24.

The sealing member 23 is arranged around the electrode lead-out hole 24. In some embodiments, the projection of the electrode lead-out hole 24 on the plane where the first wall 25 is located is circular, and the projection of the sealing member 23 surrounding the electrode lead-out hole 24 on the plane where the first wall 25 is located may be in the shape of a circular ring. In some embodiments, the projection of the electrode lead-out hole 24 on the plane where the first wall 25 is located may also be in other shapes, such as a rectangle or a rounded rectangle, and the projection of the sealing member 23 surrounding the electrode lead-out hole 24 on the plane where the first wall 25 is located may be in the shape of a rectangular ring or a rounded rectangular ring. The embodiments of the present application are described by taking an example in which the projection of the electrode lead-out hole 24 is circular and the projection of the sealing member 23 is in the shape of a circular ring.

The battery cell 20 is usually provided with a plurality of electrode lead-out holes 24, and a sealing member 23 may be correspondingly provided for each electrode lead-out hole 24.

The extension portion 231 of the sealing member 23 may be partially arranged between the first wall 25 and the electrode terminal 21, and partially extended towards the direction away from the electrode lead-out hole 24. In some embodiments, the extension portion 231 may be completely arranged between the first wall 25 and the electrode terminal 21. The extension portion 231 may at least provide a certain sealing effect between the first wall 25 and the electrode terminal 21.

In some embodiments, the extension portion 231 may have a first protrusion 2311, and the first wall 25 may have a first groove 2312 matched with the first protrusion 2311, as shown in FIG. 5. The first protrusion 2311 of the extension portion 231 may protrude away from the extension portion 231 along the thickness direction Y of the first wall 25, and the first groove 2312 may be recessed away from the extension portion 231 along the thickness direction Y of the first wall 25. The first protrusion 2311 is arranged on the surface of the extension portion 231 facing the first wall 25, and the direction away from the extension portion 231 along the thickness direction Y of the first wall 25 refers to the direction from the surface pointing to the first wall 25 in the thickness direction Y of the first wall 25, and may also refer to the direction from the surface pointing away from the extension portion 231. The first groove 2312 is arranged on the surface of the first wall 25 facing the extension portion 231, the first groove 2312 is recessed from the surface in the direction pointing to the first wall 25, or in other words, the first groove 2312 is recessed from the surface in the direction pointing away from the extension portion 231.

The first protrusion 2311 and the first groove 2312 are matched with each other. In some embodiments, the first protrusion 2311 may be just accommodated in the first groove 2312, so that the first protrusion 2311 and the first groove 2312 are matched more closely. In some embodiments, the volume of the first protrusion 2311 may be slightly smaller than the volume that the first groove 2312 can accommodate, so as to facilitate the assembly between the sealing member 23 and the first wall 25. In some embodiments, the first protrusion 2311 may be accommodated in the first groove 2312 after being compressed, so that more close matching may be achieved while facilitating the assembly between the sealing member 23 and the first wall 25.

In some embodiments, the extension portion 231 may have a first groove 2312, and the first wall 25 may have a first protrusion 2311 matched with the first groove 2312, as shown in FIG. 6. The first groove 2312 of the extension portion 231 may be recessed facing the extension portion 231 along the thickness direction Y of the first wall 25, and the first protrusion 2311 may protrude facing the extension portion 231 along the thickness direction Y of the first wall 25. The first groove 2312 is arranged on the surface of the extension portion 231 facing the first wall 25, and the direction facing the extension portion 231 along the thickness direction Y of the first wall 25 refers to the direction from the surface pointing to the extension portion 231 in the thickness direction Y of the first wall 25, and may also refer to the direction from the surface pointing away from the first wall 25. The first protrusion 2311 is arranged on the surface of the first wall 25 facing the extension portion 231, the first protrusion 2311 protrudes from the surface in the direction pointing to the extension portion 231, or in other words, the first protrusion 2311 protrudes from the surface in the direction pointing away from the first wall 25.

In some embodiments, the first protrusion 2311 may be just accommodated in the first groove 2312, or the volume of the first protrusion 2311 may be slightly smaller than the volume that the first groove 2312 can accommodate. In some embodiments, considering that the sealing member 23 usually has certain elasticity, the extension portion 231 of the sealing member 23 may be stretched and then matched with the first protrusion 2311, so that the first protrusion 2311 and the first groove 2312 may be further matched closely, thereby improving the sealing degree between the sealing member 23 and the first wall 25.

By arranging the mutually matched protrusion and groove on the sealing member 23 and the first wall 25, the sealing member 23 and the first wall 25 may be matched more closely to improve the sealing degree between the sealing member 23 and the first wall 25 and reduce the possibility of the sealing member 23 falling off, thereby improving the reliability of the battery cell 20.

According to an embodiment of the present application, the surface of the first wall 25 facing the extension portion 231 has a first groove 2312, and the surface of the extension portion 231 facing the first wall 25 has a first protrusion 2311.

As shown in FIG. 5, the surface of the first wall 25 facing the extension portion 231 may be the surface on which the sealing member 23 is arranged, this surface is in contact with the sealing member 23 and has a first groove 2312, and this surface may also be regarded as the surface where the opening of the first groove 2312 is located. The surface of the extension portion 231 facing the first wall 25 may be a part of the sealing member 23 in contact with the surface of the first wall 25 facing the extension portion 231, and the part is provided with a first protrusion 2311 matched with the first groove 2312.

In some possible implementations, the first protrusion 2311 may be located at any position of the surface of the extension portion 231 facing the first wall 25. As shown in FIG. 7, the first protrusion 2311 may be arranged in the region between the inner ring and the outer ring of the sealing member 23. In some embodiments, the first protrusions 2311 may surround the electrode lead-out hole 24 for one circle. In some embodiments, the first protrusions 2311 may be arranged at intervals along the circumferential direction of the electrode lead-out hole 24.

By arranging the first groove 2312 on the first wall 25 and arranging the first protrusion 2311 matched with the first groove 2312 on the sealing member 23, in a case that the first wall 25 is subjected to a pressure perpendicular to the first wall 25, a side wall of the first groove 2312 can limit the relative sliding between the first protrusion 2311 and the first groove 2312, which is conducive to reducing the possibility of the sealing member 23 falling off from the first wall 25, thereby improving the sealing degree of the sealing member 23 to the first wall 25 and improving the reliability of the battery cell 20.

According to an embodiment of the present application, the first protrusion 2311 is located at the outer edge of the extension portion 231.

As shown in FIG. 5, the outer edge of the extension portion 231 may be an edge of the extension portion 231 away from the electrode lead-out hole 24, and specifically may be an edge of the extension portion 231 away from the electrode lead-out hole 24 in the radial direction X of the electrode lead-out hole 24. In some embodiments, the outer edge of the extension portion 231 may be an outer ring of the sealing member.

In a case that the first wall 25 is subjected to an external force, the deformation of the region of the first wall 25 where the outer ring of the sealing member is located is smaller, and the outer ring of the sealing member is not easy to fall off from the first wall 25. Referring to FIG. 3 to FIG. 5, in some embodiments, the region of the first wall 25 between the two electrode terminals 21 may be subjected to an external force along the thickness direction of the first wall 25. In this case, the region between the two electrode terminals 21 on the first wall 25 will produce a larger deformation along the thickness direction Y of the first wall 25, and the deformation will be smaller on part of the first wall 25 that is farther away from the force-bearing region. Therefore, the first protrusion 2311 located at the outer edge of the sealing member 23 is less likely to be detached from the first wall 25 due to an external force.

In a case that the first wall 25 is subjected to an external force, the deformation of the region where the outer edge of the sealing member 23 is located is smaller, and the first protrusion 2311 is not easy to slip out of the first groove 2312, thereby reducing the possibility of the sealing member detaching from the first wall 25, improving the sealing degree of the sealing member 23 to the first wall 25, and improving the reliability of the battery cell 20.

According to an embodiment of the present application, the extension portion 231 has a plurality of first protrusions 2311, and the plurality of first protrusions 2311 are arranged at intervals along the radial direction X of the electrode lead-out hole 24.

The radial direction X of the electrode lead-out hole 24 refers to the direction of a straight line passing through the center of the electrode lead-out hole 24 on the plane perpendicular to the thickness of the first wall 25. In some embodiments, the cross section of the electrode lead-out hole 24 on the plane perpendicular to the thickness of the first wall 25 is circular, and the radial direction X of the electrode lead-out hole 24 may refer to the direction of a straight line passing through the center of a circle. In some embodiments, the radial direction X of the electrode lead-out hole 24 may be parallel to the length direction of the first wall 25. In FIG. 4 to FIG. 8, the radial direction X of the electrode lead-out hole 24 may be the direction perpendicular to the thickness of the first wall 25 in a cross-sectional diagram along the K-K direction.

As shown in FIG. 8, a plurality of first protrusions 2311 may be arranged at intervals along the radial direction X of the electrode lead-out hole 24. In some embodiments, the plurality of first protrusions 2311 may all be protrusions surrounding the electrode lead-out hole 24. In some embodiments, the plurality of first protrusions 2311 may be arranged only on an arc surrounding the electrode lead-out hole 24. In some embodiments, the plurality of first protrusions 2311 may be arranged at intervals along the radial direction X of the electrode lead-out hole 24 and staggered with each other. In some embodiments, the first protrusion 2311 may also be configured to be rectangular.

The plurality of first protrusions 2311 can limit the relative sliding between the first protrusions 2311 and the first grooves 2312 at a plurality of positions, thereby further reducing the possibility of the sealing member falling off from the first wall 25.

According to an embodiment of the present application, the distance between the surface where the opening of the first groove 2312 is located and the surface where the bottom wall of the first groove 2312 is located is A2, the distance between the surface where the opening of the first groove 2312 is located and the surface of the first wall 25 away from the extension portion 231 is A, and A2 and A satisfy: A2/A≤95%, and/or A-A2≥0.2 mm.

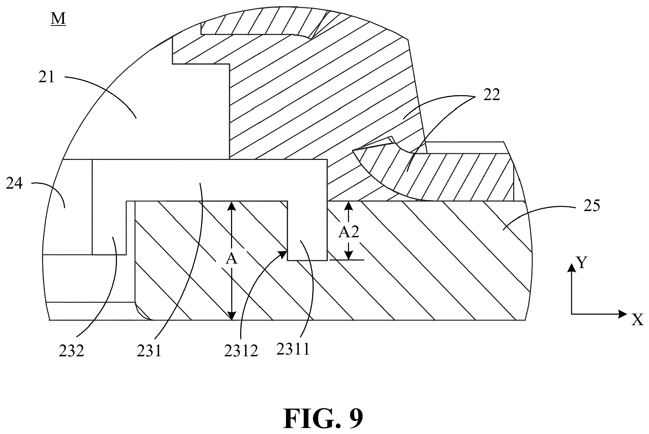

In the part M shown in FIG. 9, the surface where the opening of the first groove 2312 is located may be the surface near the opening of the first groove 2312 on the first wall 25, and the surface is in contact with the extension portion 231 of the sealing member 23. The distance between the surface where the opening of the first groove 2312 is located and the surface where the bottom wall of the first groove 2312 is located is A2 shown in FIG. 9, and A2 may be the depth of the first groove 2312.

The distance between the surface where the opening of the first groove 2312 is located and the surface of the first wall 25 away from the extension portion 231 is A shown in FIG. 9, and A may be the thickness of the first wall 25 near the opening of the first groove 2312. In FIG. 9, the sealing member 23 is arranged on one side of the first wall 25 along the thickness direction Y, this side is the side of the first wall 25 facing the extension portion 231, the surface of the first wall 25 on this side is the surface of the first wall 25 facing the extension portion 231, and the surface of the first wall 25 on the other side along the thickness direction Y is the surface of the first wall 25 away from the extension portion 231.

In some embodiments, A2 and A satisfy A2/A≤95%. If A2/A>95%, the distance between the bottom wall of the first groove 2312 and the surface of the first wall 25 away from the extension portion 231 will be too small, which may easily reduce the strength of the first wall 25 and cause the first wall 25 to break when subjected to an external force.

In some embodiments, A2 and A satisfy A-A2≥0.2 mm. If A-A2<0.2 mm, the distance between the bottom wall of the first groove 2312 and the surface of the first wall 25 away from the extension portion 231 will be too small, which may easily reduce the strength of the first wall 25 and cause the first wall 25 to break when subjected to an external force.

In some embodiments, A2 and A may simultaneously satisfy A2/A≤95% and A-A2≥0.2 mm, so that the first wall 25 has higher strength, thereby reducing the possibility of the sealing member 23 falling off from the first wall 25 while reducing the possibility of the first wall 25 being broken by an external force.

According to an embodiment of the present application, the size of the first protrusion 2311 in the radial direction X of the electrode lead-out hole 24 is T1, the size of the first groove 2312 in the radial direction X of the electrode lead-out hole 24 is A1, and A1 and T1 satisfy: T1/A1≤98%, and/or A1-T1≥0.1 mm.

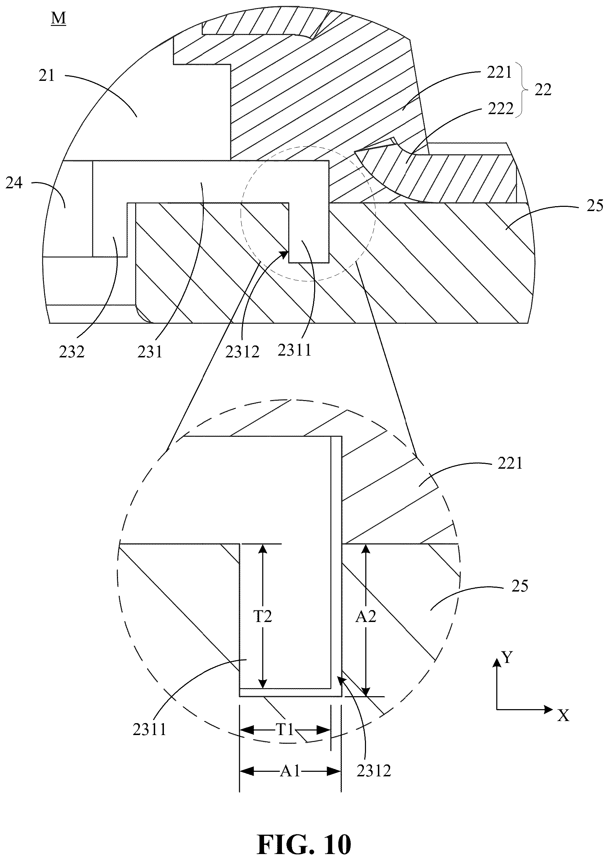

As shown in FIG. 10, in some embodiments, A1 and T1 satisfy T1/A1≤98%. If T1/A1>98%, the first protrusion 2311 is likely to interfere with the edge of the first groove 2312 during the assembly process, and an assembly machine needs to have higher precision to accommodate the first protrusion 2311 in the first groove 2312, which is not conducive to improving the production efficiency of the battery cell 20.

In some embodiments, A1 and T1 satisfy A1-T1≥0.1 mm. If A1-T1<0.1 mm, the first protrusion 2311 is likely to interfere with the edge of the first groove 2312 during the assembly process, making the assembly difficult, which is not conducive to improving the production efficiency of the battery cell 20 and also not conducive to improving the qualified rate of the battery cell 20.

In some embodiments, A1 and T1 may simultaneously satisfy T1/A1≤98% and A1-T1≥0.1 mm to improve the production efficiency of the battery cell 20.

In some embodiments, T1≥0.2 mm. If T1<0.2 mm, it is difficult for the first protrusion 2311 to limit the sliding of the sealing member 23.

According to an embodiment of the present application, the size of the first protrusion 2311 in the thickness direction Y of the first wall 25 is T2, the maximum size of the first groove 2312 in the thickness direction Y of the first wall 25 is A2, and T2 and A2 satisfy 0<T2/A2≤100%.

As shown in FIG. 10, the size of the first protrusion 2311 in the thickness direction Y of the first wall 25 is the size of the first protrusion 2311 protruding from the extension portion 231, that is, the size shown as T2 in FIG. 10; and the maximum size of the first groove 2312 in the thickness direction Y of the first wall 25 is the depth of the first groove 2312, or may be considered as the distance between the plane where the opening of the first groove 2312 is located and the bottom wall of the first groove 2312, that is, the size shown as A2 in FIG. 10.

In some embodiments, T2 and A2 satisfy 0<T2/A2≤100%. If T2/A2>100%, a gap will be left between the extension portion 231 of the sealing member 23 and the first wall 25, and it is difficult to achieve better sealing between the first wall 25 and the electrode terminal 21, which is not conducive to improving the reliability of the battery cell 20.

According to an embodiment of the present application, the size of the first protrusion 2311 in an uncompressed state in the thickness direction Y of the first wall 25 is T3, the maximum size of the first groove 2312 in the thickness direction Y of the first wall 25 is A2, and T3 and A2 satisfy 30%<T3/A2≤150%.

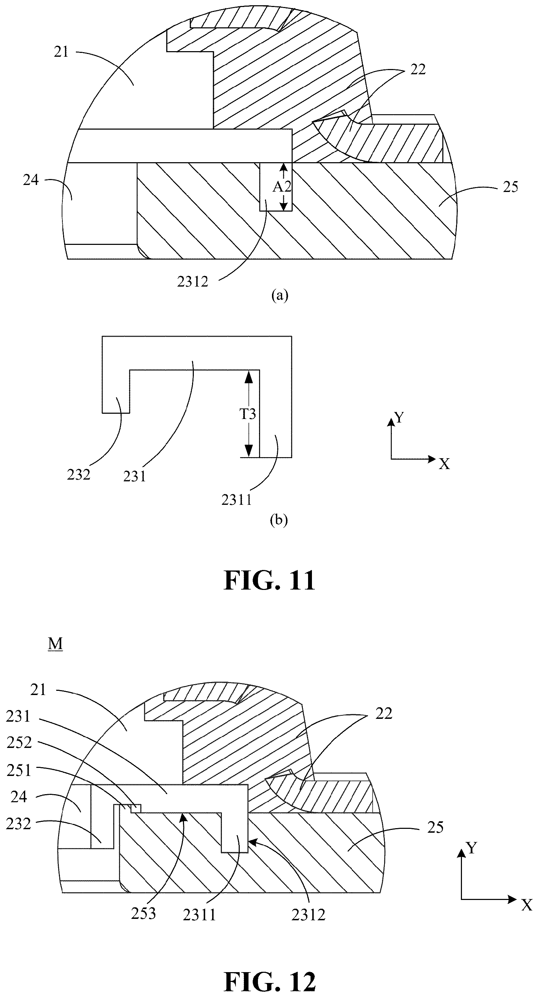

FIG. 11 (a) shows a cross-sectional diagram of the part M in a case that a sealing member 23 is not assembled, and FIG. 11 (b) shows a schematic diagram of a sealing member 23 that is not assembled to a battery cell 20. During the process of assembling the sealing member 23 shown in FIG. 11 (b) to the battery cell 20, the first protrusion 2311 may be gradually compressed in the first groove 2312 until the first protrusion 2311 is completely accommodated in the first groove 2312. Therefore, the state of the sealing member 23 before being assembled to the battery cell 20 is the uncompressed state of the sealing member 23. In the assembled battery cell 20, the extension portion 231 of the sealing member 23 may be in contact with the first wall 25.

As shown in FIG. 11, the size of the first protrusion 2311 of the sealing member 23 in the uncompressed state in the thickness direction Y of the first wall 25 is T3, and T3 may be the size of the first protrusion 2311 protruding from the extension portion 231 in the uncompressed state. The maximum size of the first groove 2312 in the thickness direction Y of the first wall 25 is A2, and A2 may be the distance between the surface where the opening of the first groove 2312 is located and the surface where the bottom wall of the first groove 2312 is located, that is, the depth of the first groove 2312.

In some embodiments, T3 and A2 satisfy 30%<T3/A2≤150%. In a case that T3 and A2 satisfy 30%<T3/A2≤100%, the first protrusion 2311 may be accommodated in the first groove 2312 without being compressed. In a case that T3 and A2 satisfy 100%<T3/A2≤150%, the first protrusion 2311 needs to be compressed so that the first protrusion 2311 is accommodated in the first groove 2312. If T3/A2≤30%, the limiting effect on the first protrusion 2311 is insufficient. In a case that the first wall 25 is deformed by an external force, relative sliding is likely to occur between the sealing member 23 and the first wall 25, causing the sealing member 23 to fall off. If T3/A2>150%, the first protrusion 2311 is difficult to be completely compressed into the first groove 2312. On the one hand, this may cause a gap between the extension portion 231 and the first wall 25, resulting in insufficient sealing performance between the electrode terminal 21 and the first wall 25. On the other hand, the expansion force of the first protrusion 2311 acting between the first wall 25 and the electrode terminal 21 or between the first wall 25 and a fixing member 22 may be larger, which is not conducive to good sealing inside the battery cell 20.

T3 and A2 satisfy 30%<T3/A2≤150%, which may allow the sealing member 23 to provide good sealing performance for the battery cell 20 while limiting the sliding of the sealing member 23 in a case that the first wall 25 is deformed by a force, thereby reducing the possibility of the sealing member 23 falling off from the first wall 25, which is conducive to improving the reliability of the battery.

According to an embodiment of the present application, T3 and A2 satisfy 85%<T2/A2≤100%.

In some embodiments, T3 and A2 may further satisfy 85%<T2/A2≤100%, which may improve the limiting effect on the first protrusion 2311 on the relative sliding of the sealing member 23 and also provide a better sealing effect.

According to an embodiment of the present application, a second protrusion 251 is arranged on the surface of the first wall 25 away from the inside of the battery cell 20, the second protrusion 251 is arranged around the electrode lead-out hole 24, the extension portion 231 is provided with a second groove 252, and the second protrusion 251 is matched with the second groove 252.

As shown in FIG. 12, the surface 253 of the first wall 25 away from the inside of the battery cell 20 is in contact with at least a part of the extension portion 231, and may be the surface where the opening of the first groove 2312 is located. The second protrusion 251 protrudes from the surface 253.

In some embodiments, the second protrusion 251 is arranged around the electrode lead-out hole 24, and the periphery of the electrode lead-out hole 24 may refer to a part between a side wall of the electrode lead-out hole 24 and a side wall of the first groove 2312. Specifically, the first side wall of the first groove 2312 is close to the electrode lead-out hole 24 in the radial direction X of the electrode lead-out hole 24, and the second side wall is far away from the electrode lead-out hole 24 in the radial direction X of the electrode lead-out hole 24, so the periphery of the electrode lead-out hole 24 may be the part between the side wall of the electrode lead-out hole 24 and the first side wall.

The second protrusion 251 of the first wall 25 and the second groove 252 of the sealing member 23 are arranged opposite to each other and may be matched with each other during the assembly process, so that the second protrusion 251 may be accommodated in the second groove 252. In some embodiments, in the radial direction X of the electrode lead-out hole 24, the size of the second groove 252 may be slightly larger than the size of the second protrusion 251, so that the second groove 252 may be easily aligned with the second protrusion 251 during the assembly process.

By arranging the second protrusion 251 and second groove 252 matched with each other, the sealing member 23 may be better positioned during the assembly process with the first wall 25, thereby reducing the possibility of assembly failure caused by misalignment between the sealing member 23 and the first wall 25.

According to an embodiment of the present application, the surface of the first wall 25 away from the extension portion 231 is provided with a third protrusion 255 corresponding to the first groove 2312.

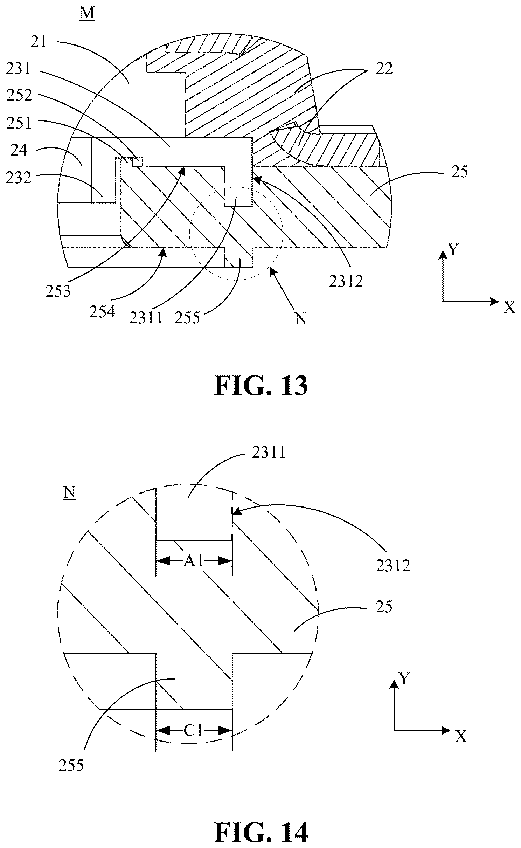

The surface 254 of the first wall 25 away from the extension portion 231 is shown in FIG. 13, and the third protrusion 255 may protrude from the surface 254 along the thickness direction Y of the first wall 25 away from the extension portion 231.

In some embodiments, the third protrusions 255 may surround the electrode lead-out hole 24 in the circumferential direction of the electrode lead-out hole 24, or may be arranged at intervals along the circumferential direction of the electrode lead-out hole 24.

In some embodiments, the third protrusion 255 may be arranged opposite to the first groove 2312 in the radial direction of the electrode lead-out hole 24. Specifically, in the radial direction of the electrode lead-out hole 24, the third protrusion and the first groove are located at the same position. From another perspective, along the direction in which the first groove 2312 is recessed on the surface 253, the third protrusion 255 protrudes from the surface 254 of the first wall 25. In some embodiments, the third protrusion 255 may be a protrusion formed on another surface opposite to the first wall when the first groove 2312 is punched on the surface of the first wall 25.

The third protrusion 255 may increase the thickness of the first wall 25 in the region where the first groove 2312 is located, improve the strength of the first wall 25, and reduce the possibility of the first wall 25 being broken in a thinner region due to an external force, thereby improving the reliability of the battery cell 20.

According to an embodiment of the present application, the size of the third protrusion 255 in the radial direction X of the electrode lead-out hole 24 is C1, the size of the first groove 2312 in the radial direction X of the electrode lead-out hole 24 is A1, the length of the first wall 25 is L, and A1, C1 and L satisfy: A1≤C1≤50 mm, and/or C1/L≤50%.

FIG. 14 is a schematic enlarged structural diagram of a part N in FIG. 13. The size A1 of the first groove 2312 in the radial direction X of the electrode lead-out hole 24 and the size C1 of the third protrusion 255 in the radial direction X of the electrode lead-out hole 24 are shown in FIG. 14, and the length L of the first wall 25 is shown in FIG. 3.

In some embodiments, A1 and C1 satisfy A1≤C1≤50 mm. If A1>C1, there will still be regions on the first wall 25 that are thinned due to the arrangement of the first groove 2312. When the first wall 25 is subjected to an external force, these thinned regions are more likely to break than other regions and cannot play a role in increasing the strength of the first wall 25. If C1>50 mm, the third protrusion 255 has a little effect on further increasing the strength of the first wall 25, but instead increases the material required in the production process of the first wall 25, thereby increasing the production cost.

In some embodiments, C1 and L satisfy C1/L≤50%. If C1/L>50%, the third protrusion 255 may be regarded as thickening the first wall 25 as a whole. Compared with the case where C1 and L satisfy C1/L≤50%, in a case that C1/L>50%, the third protrusion 255 has a little effect on further improving the strength of the first wall 25, and will also increase the production cost of the first wall 25.

In some embodiments, A1, C1 and L may simultaneously satisfy A1≤C1≤50 mm and C1/L≤50%, so that the production cost of the first wall 25 may be controlled as much as possible while the strength of the first wall 25 is improved.

According to an embodiment of the present application, the joint between the third protrusion 255 and the first wall 25 is provided with a rounded corner and/or a chamfered corner.

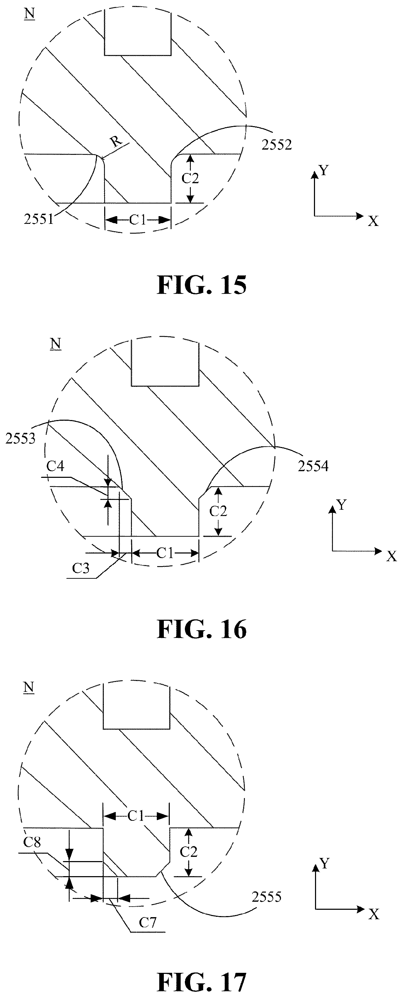

FIG. 15 is a schematic diagram showing that the joint between the third protrusion 255 and the first wall 25 is provided with a rounded corner, and FIG. 16 is a schematic diagram showing that the joint between the third protrusion 255 and the first wall 25 is provided with a chamfered corner. In some embodiments, both sides of the joint between the third protrusion 255 and the first wall 25 in the radial direction X of the electrode lead-out hole 24 may be provided with rounded corners or chamfered corners, or one may be provided with a rounded corner and the other may be provided with a chamfered corner.

The rounded corner and/or the chamfered corner may reduce the possibility of stress concentration in a joint between the third protrusion 255 and the first wall 25, which is conducive to improving the strength of the first wall 25, so that the first wall 25 is not easily broken when subjected to an external force.

According to an embodiment of the present application, the joint between the third protrusion 255 and the first wall 25 is provided with a first rounded corner 2551 and/or a second rounded corner 2552. In the radial direction X of the electrode lead-out hole 24, the first rounded corner 2551 is close to the electrode lead-out hole 24, and the second rounded corner 2552 is far away from the electrode lead-out hole 24.

In some embodiments, the third protrusion 255 may be transitionally connected to the first wall 25 through the first rounded corner 2551 on the side close to the electrode lead-out hole 24. In some embodiments, the third protrusion 255 may be transitionally connected to the first wall 25 through the second rounded corner 2552 on the side away from the electrode lead-out hole 24. In some embodiments, the transition joint between the third protrusion 255 and the first wall 25 may be simultaneously provided with the first rounded corner 2551 and the second rounded corner 2552.

The first rounded corner 2551 and/or the second rounded corner 2552 may reduce the stress concentration at corresponding positions, so that the first wall 25 is not easily broken in the transition region between the third protrusion 255 and the first wall 25 when subjected to an external force, which is conducive to improving the reliability of the first wall 25.

According to an embodiment of the present application, the radius of the first rounded corner 2551 and/or the second rounded corner 2552 is half of the size of the third protrusion 255 in the thickness direction Y of the first wall 25.

FIG. 15 shows a radius R of the first rounded corner 2551 and the size C2 of the third protrusion 255 in the thickness direction Y of the first wall 25. In some embodiments, R and C2 may satisfy C2=2R. In this case, a space may be reserved for the corner of the third protrusion 255 away from the first wall 25 in the thickness direction Y of the first wall 25 to be provided with a rounded corner or a chamfered corner to reduce the stress concentration generated at the corresponding corner of the third protrusion 255. If R and C2 do not satisfy C2=2R, larger stress concentration may still exist in the transition region between the third protrusion 255 and the first wall 25, which is not conducive to improving the strength of the first wall 25.

In some embodiments, R and C2 may satisfy C2=R. In this case, the corner of the third protrusion 255 away from the first wall 25 in the thickness direction Y of the first wall 25 may not be provided with a rounded corner or a chamfered corner, which may also play a role in reducing the stress concentration at the corresponding position.

In some embodiments, the second rounded corner 2552 may be the same as the first rounded corner 2551, the radius of the second rounded corner 2552 may also be R, and the radius R of the second rounded corner 2552 and C2 may also satisfy C2=2R.

In some embodiments, C2 may satisfy 0.1 mm≤C2≤1.6 mm. If C2<0.1 mm, the third protrusion 255 is thinner and may be difficult to play a role in increasing the strength of the first wall 25. If C2>1.6 mm, the third protrusion 255 is too thick and may seriously affect the space inside the battery cell 20, which is not conducive to improving the energy density of the battery.

According to an embodiment of the present application, the joint between the third protrusion 255 and the first wall 25 is provided with a first chamfered corner 2553 and/or a second chamfered corner 2554. In the radial direction X of the electrode lead-out hole, the first chamfered corner 2553 is close to the electrode lead-out hole 24, and the second chamfered corner 2554 is far away from the electrode lead-out hole 24.

In some embodiments, the third protrusion 255 and the first wall 25 may be connected by a chamfered corner, as shown in FIG. 16. In some embodiments, the third protrusion 255 may be connected to the first wall 25 through the first chamfered corner 2553 on the side close to the electrode lead-out hole 24. In some embodiments, the third protrusion 255 may be connected to the first wall 25 through the second chamfered corner 2554 on the side away from the electrode lead-out hole 24. In some embodiments, the joint between the third protrusion 255 and the first wall 25 may be simultaneously provided with the first chamfered corner 2553 and the second chamfered corner 2554.

The first chamfered corner 2553 and/or the second chamfered corner 2554 may reduce the stress concentration at the joint between the third protrusion 255 and the first wall 25, so that the first wall 25 is not easily broken at the joint between the third protrusion 255 and the first wall 25 when subjected to an external force, which is conducive to improving the reliability of the first wall 25.

According to an embodiment of the present application, the chamfered corner size of the first chamfered corner 2553 and/or the second chamfered corner 2554 along the thickness direction Y of the first wall 25 is C4, the size of the third protrusion 255 in the thickness direction Y of the first wall 25 is C2, and C2 and C4 satisfy 0.1 mm≤C4≤C2.

FIG. 16 takes the first chamfered corner 2553 as an example and shows the chamfered corner size C4 of the first chamfered corner 2553 along the thickness direction Y of the first wall 25. In some embodiments, C2 and C4 satisfy 0.1 mm≤C4≤C2. If C2 and C4 do not satisfy this condition, it is difficult for the first chamfered corner 2553 to play a role in reducing the stress concentration. Similarly, the second chamfered corner 2554 that satisfies the above condition may also play a role in reducing the stress concentration at the corresponding position.

In some embodiments, C4=C1 may achieve a better effect on reducing the stress concentration.

In some embodiments, C3 may satisfy 0.1 mm≤C3≤3 mm. If C3<0.1 mm, the chamfered corner is difficult to play a role in reducing the stress concentration. If C3>3 mm, the chamfered corner has a little effect on reducing the stress concentration.

According to an embodiment of the present application, the third protrusion 255 is provided with a third rounded corner 2556 and/or a third chamfered corner 2555 at an end away from the extension portion 231.

In some embodiments, the corner of the third protrusion 255 at the end away from the extension portion 231 may be a rounded corner. Then, in the radial direction X of the electrode lead-out hole 24, the third protrusion 255 may be provided with a third rounded corner 2556 on the side close to the electrode lead-out hole 24, or provided with a third rounded corner 2556 on the side away from the electrode lead-out hole 24, or provided with third rounded corners 2556 on both sides at the same time.

In some embodiments, the corner of the third protrusion 255 at the end away from the extension portion 231 may be a chamfered corner. Then, in the radial direction X of the electrode lead-out hole 24, the third protrusion 255 may be provided with a third chamfered corner 2555 on the side close to the electrode lead-out hole 24, or provided with a third chamfered corner 2555 on the side away from the electrode lead-out hole 24, or provided with third chamfered corners 2555 on both sides at the same time.

In some embodiments, in the radial direction X of the electrode lead-out hole 24, the third protrusion 255 may be provided with one of the third rounded corner 2556 and the third chamfered corner 2555 on the side close to the electrode lead-out hole, and provided with the other of the third rounded corner 2556 and the third chamfered corner 2555 on the side away from the electrode lead-out hole 24.

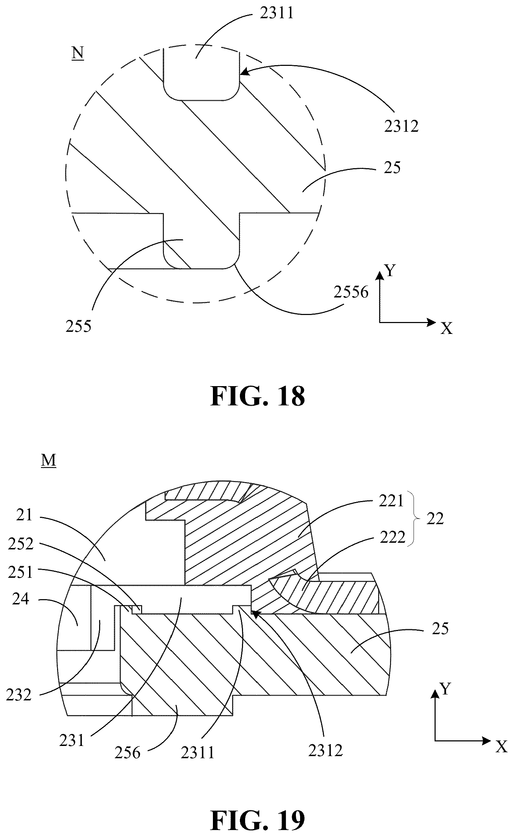

FIG. 17 only shows a case where the corners of the third protrusion 255 away from the first wall 25 in the thickness direction Y of the first wall 25 are all chamfered corners. It can be understood that the chamfered corner on at least one side in FIG. 17 may also be replaced with a rounded corner. For example, FIG. 18 shows a case where a third rounded corner 2556 is arranged at an end of the third protrusion 255 away from the extension portion 231.

This may reduce the stress concentration at the corner of the third protrusion 255 and reduce the possibility of deformation and cracking of the third protrusion 255, thereby being conducive to improving the strength of the first wall 25.

According to an embodiment of the present application, the size of the third protrusion 255 in the radial direction X of the electrode lead-out hole 24 is C1, and the size in the thickness direction Y of the first wall 25 is C2; the chamfered corner size of the third chamfered corner 2555 in the radial direction X of the electrode lead-out hole 24 is C7, and the chamfered corner size along the thickness direction Y of the first wall 25 is C8; and C1, C2, C7 and C8 satisfy: 0.1 mm≤C7≤C2, and/or 0.1 mm≤C8≤0.45C1.

The sizes indicated by C1, C2, C7 and C8 are shown in FIG. 17. In some embodiments, C2 and C7 satisfy 0.1 mm≤C7≤C2. If C2 and C7 do not satisfy this condition, it is difficult for the third chamfered corner 2555 to play a role in reducing the stress concentration.

In some embodiments, C1 and C8 satisfy 0.1 mm≤C8≤0.45C1. If C8<0.1 mm, the third chamfered corner 2555 can only play a limited role in reducing the stress concentration, and cannot better reduce the possibility of the third protrusion 255 being broken during the stress concentration. If C8>0.45C1, the remaining part of the third protrusion 255 is less, and it is difficult to play a role in increasing the strength of the first wall 25.

In some embodiments, C1, C2, C7 and C8 may simultaneously satisfy 0.1 mm≤C7≤C2 and 0.1 mm≤C8≤0.45C1, so that the third chamfered corner 2555 may reduce the stress concentration while also better improving the strength of the first wall 25.

In some embodiments, C2=C7 may achieve a better effect on reducing the stress concentration.

According to an embodiment of the present application, the joint between the bottom wall and the side wall of the first groove 2312 is provided with a rounded corner.

In the part N shown in FIG. 18, the bottom wall and the side wall of the first groove 2312 are connected by a rounded corner. In some embodiments, the bottom wall and the side wall of the first groove 2312 may also be connected by a chamfered corner.

In some embodiments, the first protrusion 2311 of the sealing member 23 may be provided with a rounded corner matched with the first groove 2312, so that the first protrusion 2311 may be better attached to the first groove 2312 when accommodated in the first groove 2312. In some embodiments, the first protrusion 2311 may also be matched with the shape of the first groove 2312 after being extruded.

In some embodiments, the third protrusion 255 may be provided with a rounded corner corresponding to the first groove 2312. For example, the rounded corner of the first groove 2312 may be a rounded corner directly formed during the stamping process, and the third protrusion 255 may have a rounded corner corresponding to the first groove 2312.

In some embodiments, the radius of the rounded corner between the bottom wall and the side wall of the first groove 2312 may be greater than or equal to 0.1 mm. If the radius of the rounded corner is less than 0.1 mm, it may be difficult to achieve a better stress reduction effect.

The rounded corner transition between the bottom wall and the side wall of the first groove 2312 may reduce the stress concentration that may be generated at the corner of the first groove 2312, and may also reduce the stress concentration generated after the sealing member 23 is compressed in the first groove 2312, so as to improve the strength of the first wall 25 at the first groove 2312, thereby being conducive to improving the reliability of the battery cell 20.

According to an embodiment of the present application, the surface of the first wall 25 facing the extension portion 231 has a first protrusion 2311, the surface of the extension portion 231 facing the first wall 25 has a first groove 2312, and the first groove 2312 is located at the outer edge of the sealing member 23.

FIG. 19 shows a case where a first protrusion 2311 is arranged on the first wall 25 and a first groove 2312 is arranged on the extension portion 231 of the sealing member 23. The surface of the first wall 25 facing the extension portion 231 is in contact with the surface of the extension portion 231 facing the first wall 25, and the first protrusion 2311 and the first groove 2312 are matched with each other. In some embodiments, the first groove 2312 may be located at any position of the surface of the extension portion 231 facing the first wall 25. For example, the first groove 2312 may be arranged in the region between the inner and outer rings of the sealing member 23. In some embodiments, the first grooves 2312 may surround the electrode lead-out hole 24 for one circle. In some embodiments, the first grooves 2312 may be arranged at intervals along the circumferential direction of the electrode lead-out hole 24.

In some embodiments, along the radial direction X of the electrode lead-out hole 24, the extension portion 231 may be provided with a plurality of first grooves 2312. In some embodiments, the plurality of first grooves 2312 may all be grooves surrounding the electrode lead-out hole 24 for one circle. In some embodiments, the plurality of first grooves 2312 may be arranged only on an arc surrounding the electrode lead-out hole 24. In some embodiments, the plurality of first grooves 2312 may be arranged at intervals along the radial direction X of the electrode lead-out hole 24 and staggered with each other.

In some embodiments, the first groove 2312 is located at the outer edge of the sealing member 23. The outer edge of the sealing member 23 may be an edge of the sealing member 23 away from the electrode lead-out hole 24 in the radial direction X of the electrode lead-out hole 24.

The structure of arranging the first groove 2312 on the sealing member 23 and arranging the first protrusion 2311 on the first wall 25 can limit the relative sliding of the sealing member 23 and the first wall 25 without reducing the thickness of the first wall 25. This can not only improve the strength of the first wall 25, but also help reduce the possibility of the sealing member 23 falling off from the first wall 25, thereby improving the sealing degree of the sealing member 23 to the first wall 25 and improving the reliability of the battery cell 20.

As shown in FIG. 19, in some embodiments, a second protrusion 251 may also be arranged on the surface of the first wall 25 where the opening of the first groove 2312 is located, and the extension portion 231 is provided with a second groove 252 matched with the second protrusion 251. In some embodiments, the surface of the first wall 25 away from the extension portion 231 is provided with a fourth protrusion 256, and the fourth protrusion 256 may correspond to a part of the surface of the first wall 25 facing the extension portion 231 where no protrusion is arranged. For example, the fourth protrusion 256 may correspond to the region between the second protrusion 251 and the first protrusion 2311.

According to an embodiment of the present application, a fixing member 22 is arranged around the electrode terminal 21, and the fixing member 22 is configured to fix the electrode terminal 21 and the first wall 25.

As shown in FIG. 3 to FIG. 19, the fixing member 22 may surround the electrode terminal 21 to fix the relative position of the electrode terminal 21 and the first wall 25. A part of the fixing member 22 in contact with the electrode terminal 21 may generally play an insulating role to reduce the possibility of short circuit of the battery cell 20.

By arranging the fixing member 22 around the electrode terminal 21, on the one hand, the electrode terminal 21 may be fixed to the first wall 25, and on the other hand, it is conducive to the insulation between the electrode terminal 21 and the first wall 25, thereby reducing the possibility of short circuit of the battery cell 20.

According to an embodiment of the present application, the fixing member 22 includes an insulating portion 221, the insulating portion 221 surrounds the electrode terminal 21, and a part of the sealing member 23 provided with the first protrusion 2311 or the first groove 2312 is located between the insulating portion 221 and the first wall 25.

In some embodiments, the fixing member 22 may include an insulating portion 221, where the insulating portion 221 surrounds the electrode terminal 21 and may be in contact with the electrode terminal 21. The material of the insulating portion 221 may include, but is not limited to, polypropylene (PP), polystyrene (PS), or acrylonitrile butadiene styrene (ABS). In some embodiments, the fixing member 22 may include a welded portion 222, and the welded portion 222 is configured to fix the electrode terminal 21 to the first wall. The material of the welded portion 222 may be metal, such as copper, iron, aluminum, steel, aluminum alloy, etc. In some embodiments, the material of the welded portion 222 may be the same as the material of the first wall.

In some embodiments, a part of the sealing member 23 provided with the first protrusion 2311 or the first groove 2312 is located between the insulating portion 221 and the first wall 25. Specifically, in the thickness direction Y of the first wall 25, one side of the part of the sealing member 23 provided with the first protrusion 2311 or the first groove 2312 is in contact with the insulating portion 221, and the other side is in contact with the first wall 25.

This may further achieve sealing between the insulating member and the first wall 25, which is conducive to improving the sealing performance of the battery cell 20. At the same time, in this structure, the size of the extension portion 231 in the radial direction X of the electrode lead-out hole 24 is relatively long. In a case that the first wall 25 is deformed by an external force, the sealing member 23 needs to move for a longer distance before falling off, which is also conducive to reducing the possibility of the sealing member falling off.

According to an embodiment of the present application, the sealing member 23 includes a main body portion 232 connected to the extension portion 231, and at least a part of the main body portion 232 is accommodated in the electrode lead-out hole 24.

As shown in FIG. 4 to FIG. 19, the sealing member 23 may include a main body portion 232 and an extension portion 231, where the main body portion 232 is connected to the extension portion 231, and the main body portion 232 may be at least partially accommodated in the electrode lead-out hole 24 for sealing the electrode lead-out hole 24.

The main body portion 232 in the sealing member 23 may further provide sealing for the electrode lead-out hole 24, which is conducive to improving the sealing performance of the sealing member 23 to the battery cell 20.

According to an embodiment of the present application, the battery cell 20 includes: a case 32, the case 32 being of a hollow structure with an opening; and a cover plate 33, the cover plate 33 being configured to cover the opening, where the cover plate 33 or the case 32 includes a first wall 25.

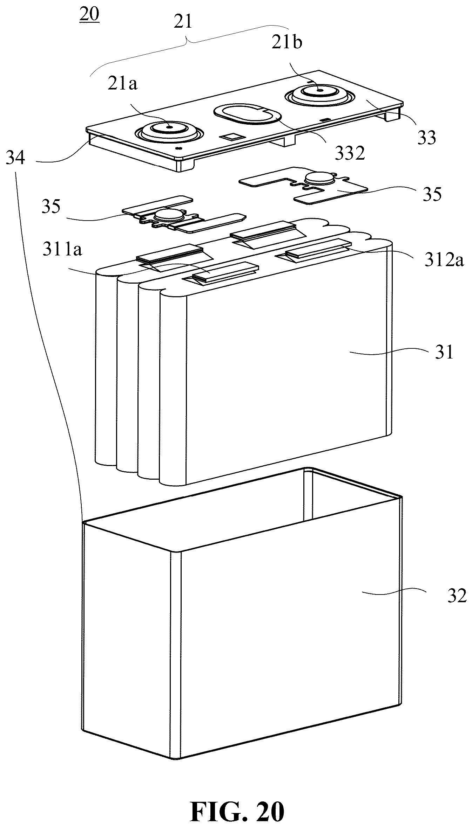

FIG. 20 shows a possible schematic exploded structural diagram of a battery cell 20. As shown in FIG. 20, the battery cell 20 may include a case 32 and a cover plate 33. The case 32 and the cover plate 33 form a shell or a battery box 34. The case 32 may be of a hollow structure with an opening formed at one end, or the case 32 may also be of a hollow structure with openings formed at two opposite ends. If the case 32 is of a hollow structure with an opening formed at one end, one cover plate 33 may be arranged. If the case 32 is of a hollow structure with openings formed at two opposite ends, two cover plates 33 may be arranged, and the two cover plates 33 cover the openings at both ends of the case 32 respectively. The case 32 may be made of various materials, such as copper, iron, aluminum, steel, and aluminum alloy. The case 32 may be in various shapes, such as a cylinder or a cuboid. When the case 32 is a hollow cuboid or cube, one of the planes of the case 32 serves as an opening face, that is, this plane does not have a wall body, allowing the interior and exterior of the case 32 to communicate with each other. When the case 32 is a hollow cylinder, an end face of the case 32 serves as an opening face, that is, this end face does not have a wall body, allowing the interior and exterior of the case 32 to communicate with each other. Exemplarily, in FIG. 3, the case 32 is of a cuboid structure, and the case 32 is of a hollow structure with an opening formed at one end. The wall of the case 32 and the cover plate 33 are both called the wall of the battery cell 20. For a cuboid-shaped battery cell 20, the wall of the case 32 includes a bottom wall and four side walls. The case 32 is filled with an electrolyte, such as an electrolyte solution.

The cover plate 33 is a component that covers the opening of the case 32 to isolate the internal environment of the battery cell 20 from the external environment. The shape of the cover plate 33 may be adapted to the shape of the case 32. As shown in FIG. 3, the case 32 is of a cuboid structure, and the cover plate 33 is of a rectangular plate-like structure adapted to the case 32. The cover plate 33 may also be made of various materials, such as copper, iron, aluminum, steel and aluminum alloy, and the material of the cover plate 33 and the material of the case 32 may be the same or different.

In some embodiments, the cover plate 33 may include a first wall 25, and the electrode terminal 21 and the sealing member 23 may be arranged on the cover plate 33. In some embodiments, the case may also include a first wall 25, and the first wall 25 may be any wall on the case.

The case and the cover plate 33 of the battery cell 20 provide a sealed space for the battery cell 20, so that chemical energy can be converted to electric energy inside the battery cell 20, and the electric energy is provided for the electrical apparatus. The case or the cover plate 33 as the first wall 25 to arrange the sealing structure is also conducive to improving the sealing performance of the battery cell 20.

According to an embodiment of the present application, the battery cell 20 includes an electrode assembly 31, the electrode assembly 31 is accommodated in the hollow structure, and the electrode assembly 31 is electrically connected to the electrode terminal 21.

The electrode assembly 31 is a component in the battery cell 20 that undergoes electrochemical reactions, and the battery cell 20 may include one or more electrode assemblies 31. The electrode assembly 31 may be of a cylinder structure, a cuboid structure, or the like. If the electrode assembly 31 is of a cylinder structure, the case 32 may also be of a cylinder structure. If the electrode assembly 31 is of a cuboid structure, the case 32 may also be of a cuboid structure. As shown in FIG. 20, each electrode assembly 31 has a first tab 311a and a second tab 312a. The first tab 311a and the second tab 312a have opposite polarities. For example, when the first tab 311a is a positive tab, the second tab 312a is a negative tab. The positive tab may be formed by stacking parts of the positive electrode plate not coated with the positive electrode active material layer, and the negative tab may be formed by stacking parts of the negative electrode plate not coated with the negative electrode active material layer. The first tab 311a of one or more electrode assemblies 31 is connected to one electrode terminal 21 through one connection member 35, and the second tab 312a of one or more electrode assemblies 31 is connected to another electrode terminal 21 through another connection member 35. For example, the positive electrode terminal 21a is connected to the positive tab through a connection member 35, and the negative electrode terminal 21b is connected to the negative tab through another connection member 35.

The battery cell 20 shown in FIG. 20 includes two electrode terminals 21, and the two electrode terminals 21 may be arranged on the cover plate 33. The two electrode terminals 21 are fixed on the plane where the cover plate 33 is located, and the two electrode terminals 21 are respectively the positive electrode terminal 21a and the negative electrode terminal 21b. Each electrode terminal 21 is correspondingly provided with a connection member 35, also referred to as a current collecting member, which is located between the cover plate 33 and the electrode assembly 31 and configured to electrically connect the electrode assembly 31 to the electrode terminal 21.

The electrode assembly 31 may achieve the conversion of chemical energy inside the battery cell 20 to electric energy, and output the electric energy through the electrode terminal 21, thereby providing the electric energy for the electrical apparatus.

According to an embodiment of the present application, the sealing member 23 is bonded to the first wall 25 or the electrode terminal 21.

In order to further reduce the possibility of the sealing member 23 falling off from the first wall 25, in some embodiments, the sealing member 23 may be bonded to the first wall 25. In some embodiments, the sealing member 23 may also be bonded to the electrode terminal 21 on the contact surface between the sealing member 23 and the electrode terminal 21. In some embodiments, considering that a part of the sealing member 23 is in contact with the insulating portion 221, the sealing member 23 may also be bonded to the insulating portion 221. In some embodiments, the sealing member 23 may also be bonded to at least two of the first wall 25, the electrode terminal 21 and the insulating portion 221 at the same time.

Bonding can increase the friction force between the sealing member 23 and the first wall 25 or the electrode terminal 21, so that when the sealing member 23 tends to slide, the sliding of the sealing member 23 can be limited by the friction force to reduce the possibility of the sealing member 23 falling off, thereby improving the sealing degree of the sealing member 23 to the first wall 25 and improving the reliability of the battery cell 20.

An embodiment of the present application provides a battery cell 20, including an electrode terminal 21, a first wall 25 and a sealing member 23. The first wall 25 is provided with an electrode lead-out hole 24. In the thickness direction of the first wall 25, the surface of the first wall 25 facing the extension portion 231 is provided with a first groove 2312 and a second protrusion 251, and the surface of the first wall 25 away from the extension portion 231 is provided with a third protrusion 255. The electrode terminal 21 is arranged opposite to the electrode lead-out hole 24, and may be arranged on a side of the electrode lead-out hole 24 facing the extension portion 231 in the thickness direction of the first wall 25. The sealing member 23 includes a main body portion 232 and an extension portion 231. At least a part of the main body portion 232 is accommodated in the electrode lead-out hole 24. The extension portion 231 is connected to the main body portion 232. At least a part of the extension portion 231 is arranged between the electrode terminal 21 and the first wall 25. The extension portion 231 is provided with a first protrusion 2311 and a second groove 252. The first protrusion 2311 is matched with the first groove 2312 on the first wall 25, and the second groove 252 is matched with the second protrusion 251 on the first wall 25. A fixing member 22 may be arranged around the electrode terminal 21, and the fixing member 22 surrounds the electrode terminal 21.

An embodiment of the present application further provides a battery, including the battery cell 20 according to any one of the above embodiments.

An embodiment of the present application further provides an electrical apparatus, including the battery according to any one of the above embodiments. The battery is configured to provide electric energy for the electrical apparatus.

Although the present application has been described with reference to the preferred embodiments, various improvements may be made and components therein may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery cell, comprising:
an electrode terminal;
a first wall, the first wall being provided with an electrode lead-out hole, and the electrode terminal and the electrode lead-out hole being arranged opposite to each other; and
a sealing member, the sealing member being arranged around the electrode lead-out hole, the sealing member comprising an extension portion, the extension portion being at least partially arranged between the first wall and the electrode terminal, the extension portion being provided with one of a first protrusion and a first groove, the first wall being provided with the other one of the first protrusion and the first groove, and the first protrusion and the first groove being matched with each other.

2. The battery cell according to claim 1, wherein the surface of the first wall facing the extension portion has the first groove, and the surface of the extension portion facing the first wall has the first protrusion.

3. The battery cell according to claim 2, wherein the first protrusion is located at the outer edge of the extension portion.

4. The battery cell according to claim 2, wherein the extension portion has a plurality of first protrusions, and the plurality of first protrusions are arranged at intervals along the radial direction of the electrode lead-out hole.

5. The battery cell according to any one of claims 2 to 4, wherein the distance between the surface where the opening of the first groove is located and the surface where the bottom wall of the first groove is located is A2, the distance between the surface where the opening of the first groove is located and the surface of the first wall away from the extension portion is A, and A2 and A satisfy: A2/A≤95%, and/or A-A2≥0.2 mm.

6. The battery cell according to any one of claims 2 to 5, wherein the size of the first protrusion in the radial direction of the electrode lead-out hole is T1, the size of the first groove in the radial direction of the electrode lead-out hole is A1, and A1 and T1 satisfy: T1/A1≤98%, and/or A1-T1≥0.1mm.

7. The battery cell according to any one of claims 2 to 6, wherein the size of the first protrusion in the thickness direction of the first wall is T2, the maximum size of the first groove in the thickness direction of the first wall is A2, and T2 and A2 satisfy 0<T2/A2≤100%.

8. The battery cell according to any one of claims 2 to 7, wherein the size of the first protrusion in an uncompressed state in the thickness direction of the first wall is T3, the maximum size of the first groove in the thickness direction of the first wall is A2, and T3 and A2 satisfy 30%<T3/A2≤150%.

9. The battery cell according to claim 8, wherein T3 and A2 satisfy 85%<T2/A2≤100%.

10. The battery cell according to any one of claims 2 to 9, wherein the surface of the first wall facing the extension portion is provided with a second protrusion, the second protrusion is arranged around the electrode lead-out hole, the extension portion is provided with a second groove, and the second protrusion is matched with the second groove.

11. The battery cell according to any one of claims 2 to 10, wherein the surface of the first wall away from the extension portion is provided with a third protrusion corresponding to the first groove.

12. The battery cell according to claim 11, wherein the size of the third protrusion in the radial direction of the electrode lead-out hole is C1, the size of the first groove in the radial direction of the electrode lead-out hole is A1, the length of the first wall is L, and A1, C1 and L satisfy: A1≤Cl≤50 mm, and/or C1/L≤50%.

13. The battery cell according to claim 11 or 12, wherein the joint between the third protrusion and the first wall is provided with a rounded corner and/or a chamfered corner.

14. The battery cell according to claim 13, wherein the joint between the third protrusion and the first wall is provided with a first rounded corner and/or a second rounded corner, and in the radial direction of the electrode lead-out hole, the first rounded corner is close to the electrode lead-out hole, and the second rounded corner is far away from the electrode lead-out hole.

15. The battery cell according to claim 14, wherein the radius of the first rounded corner and/or the second rounded corner is half of the size of the third protrusion in the thickness direction of the first wall.

16. The battery cell according to claim 13, wherein the joint between the third protrusion and the first wall is provided with a first chamfered corner and/or a second chamfered corner, and in the radial direction of the electrode lead-out hole, the first chamfered corner is close to the electrode lead-out hole, and the second chamfered corner is far away from the electrode lead-out hole.

17. The battery cell according to claim 16, wherein the chamfered corner size of the first chamfered corner and/or the second chamfered corner along the thickness direction of the first wall is C4, the size of the third protrusion in the thickness direction of the first wall is C2, and C2 and C4 satisfy 0.1 mm≤C4≤C2.

18. The battery cell according to any one of claims 11 to 17, wherein the third protrusion is provided with a third rounded corner and/or a third chamfered corner at an end away from the extension portion.

19. The battery cell according to claim 18, wherein the size of the third protrusion in the radial direction of the electrode lead-out hole is C1, and the size in the thickness direction of the first wall is C2; the chamfered corner size of the third chamfered corner in the radial direction of the electrode lead-out hole is C7, and the chamfered corner size along the thickness direction of the first wall is C8; and C1, C2, C7 and C8 satisfy: 0.1 mm≤C7≤C2, and/or 0.1 mm≤C8≤0.45C1.

20. The battery cell according to any one of claims 1 to 19, wherein the joint between the bottom wall and the side wall of the first groove is provided with a rounded corner.

21. The battery cell according to claim 1, wherein the surface of the first wall facing the extension portion has the first protrusion, the surface of the extension portion facing the first wall has the first groove, and the first groove is located at the outer edge of the sealing member.

22. The battery cell according to any one of claims 1 to 21, wherein a fixing member is arranged around the electrode terminal, and the fixing member is configured to fix the electrode terminal and the first wall.

23. The battery cell according to claim 22, wherein the fixing member comprises an insulating portion, the insulating portion surrounds the electrode terminal, and a part of the sealing member provided with the first protrusion or the first groove is located between the insulating portion and the first wall.

24. The battery cell according to any one of claims 1 to 23, wherein the sealing member comprises a main body portion connected to the extension portion, and at least a part of the main body portion is accommodated in the electrode lead-out hole.

25. The battery cell according to any one of claims 1 to 24, wherein the battery cell comprises:
a case, the case being of a hollow structure with an opening; and
a cover plate, the cover plate being configured to cover the opening, wherein
the cover plate or the case comprises the first wall.

26. The battery cell according to claim 25, wherein the battery cell comprises:
an electrode assembly, the electrode assembly being accommodated in the hollow structure, and the electrode assembly being electrically connected to the electrode terminal.

27. The battery cell according to any one of claims 1 to 26, wherein the sealing member is bonded to the first wall or the electrode terminal.

28. A battery, comprising:
the battery cell according to any one of claims 1 to 27.

29. An electrical apparatus, comprising:
the battery according to claim 28, the battery being configured to provide electric energy for the electrical apparatus.
